# EUROPÄISCHE PATENTSCHRIFT

(11) **EP 1 626 903 B1**
(45) Veröffentlichungstag und Bekanntmachung des Hinweises auf die Patenterteilung: **06.06.2007**
(21) Anmeldenummer: 04729613.2
(22) Anmeldetag: 27.04.2004
(51) Int. Cl.: B65B 3/02

(54) **VORRICHTUNG ZUM BLASFORMEN, FÜLLEN UND VERSCHLIESSEN VON KUNSTSTOFFBEHÄLTERN**
DEVICE FOR BLOW MOULDING, FILLING AND CLOSING PLASTIC CONTAINERS
DISPOSITIF DE SOUFFLAGE, DE REMPLISSAGE ET DE FERMETURE DE CONTENANTS EN PLASTIQUE

(30) Priorität: 23.05.2003 DE 10323335
(43) Veröffentlichungstag der Anmeldung: 22.02.2006
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2004/004419
(87) Internationale Veröffentlichungsnummer: WO 2004/103817

(56) Entgegenhaltungen:
- US-A- 3 883 286
- US-B1- 6 214 282
- PATENT ABSTRACTS OF JAPAN Bd. 0131, Nr. 22 (M-807), 27. März 1989 (1989-03-27) -& JP 63 297024 A (TOPPAN PRINTING CO LTD), 5. Dezember 1988 (1988-12-05)

## Beschreibung

Die Erfindung betrifft eine Herstellvorrichtung zum Durchführen eines Blasform-, Füll- und Schließverfahrens für Kunststoffbehälter mit mindestens einer ersten Art einer Formvorrichtung, in die mindestens ein Schlauch plastifizierten Kunststoffes einbringbar ist gemäß der Merkmalsausgestaltung des Oberbegriffes des Patentanspruches 1.

Im Stand der Technik (DE 19926329A1, US 6 214 282 B1) sind Verfahren und Vorrichtungen zum Herstellen von Kunststoffbehältern bekannt, bei denen ein Schlauch plastifizierten Kunststoffmaterials in eine Formeinrichtung hinein extrudiert wird, das eine Ende des Schlauches durch Verschweißen verschlossen wird und durch Erzeugen eines am Schlauch wirkenden pneumatischen Druckgradienten dieser aufgeweitet und zur Bildung des Behälters an die formgebende Wand der Formeinrichtung, bestehend aus zwei gegenüberliegenden Formwerkzeugen, angelegt wird. Über einen entsprechenden Fülldorn wird dann der Kunststoffbehälter steril innerhalb der Formeinrichtung befüllt und nach Entnahme des Fülldornes anschließend hermetisch unter Bildung einer vorgebbaren Kopfgeometrie verschlossen, wobei für die Bildung des eigentlichen Kunststoffbehälters, in dem später das Fluid.bevorratet ist, zwei Behälterformgebungsbacken mittels hydraulischer Antriebsmittel für den Erhalt einer Schließstellung aufeinander-zu und in eine ihrer Öffnungsstellungen voneinander gegenläufig weg bewegbar sind.

Die mittels der beiden getrennt ansteuerbaren Kopfbacken zu erzeugenden Kopfgeometrien umfassen dabei regelmäßig auch das Halsteil des Kunststoffbehälters - auch in Form von Ampullen -, das über eine Trennstelle von einem Kopfstück verschlossen für einen Fluid-Entnahmevorgang öffenbar ist, sobald das Kopfstück über einen an ihm angeformten Knebelteil über die Trennstelle abgetrennt und dergestalt vom eigentlichen Kunststoffbehälter entfernt wird.

Dahingehende Verfahren sind in einer Vielzahl von Ausführungsformen bekannt und finden verbreitet Anwendung bei Verpackungssystemen für flüssige oder pastöse Produkte.

Die in der Praxis regelmäßig zum Einsatz kommenden hydraulischen Antriebssysteme für die jeweilige Zustellbewegung des Formwerkzeuges werfen insoweit Probleme auf, als etwaige Leckagen zu Verschmutzungen mit dem Fluid führen können, was insbesondere beim Einsatz der formgebenden Maschinen für Kunststoffbehälter in der Pharmazeutik und im Lebensmittelbereich sowie allgemein in der Medizintechnik zu Problemen führt. Auch ist der Wartungsaufwand erhöht und häufig erreichen die hydraulischen Antriebssysteme nicht die für eine Massenproduktion gewünschten Taktzeiten oder niedrige Taktzeiten gehen zu Lasten einer genauen Positionierung der Formwerkzeuge für die Behälterformgebung, wobei bei den bekannten Herstellvorrichtungen der Blasform-, Füll- und Schließvorgang ortsfest - also in einer einzigen Station - in zeitlicher Hintereinanderabfolge in einer Herstell maschine erfolgt, so dass für den gesamten Herstellprozeß entsprechend lange Herstellzeiten notwendig sind.

Um diesem letztgenannten Nachteil zu begegnen, insbesondere um höhere Taktraten für den Erhalt an Kunststoffbehältern zu erreichen, sind im Stand der Technik sog. Rotationsplastik-Blasformmaschinen (EP-B-0 921 932, EP-B-0 858 878) bekannt, die üblicherweise ein auf einem Grundgestell angebrachtes Rad zur Rotation um eine horizontale Rotationsachse aufweisen. Das genannte Rad beinhaltet einen Rahmen, der mehrere Formstationen trägt, von denen jede ein paar Formgestelle zum Anbringen eines Paares an Formhälften aufweist. Die Formgestelle können zwischen einer Formöffnungsstelle, in der die Formhälften voneinander beabstandet sind, um einen stranggepreßten Plastikvorformling aufzunehmen, und einer Formschließstellung, in der die Formhälften einen geschlossenen Hohlraum bilden, in dem der Vorformling blasgeformt wird, bewegt werden. Mit diesen bekannten Rotationsplastik-Blasformmaschinen lassen sich jedoch die derart erhaltenen blasgeformten Behälter weder befüllen noch steril verschließen, und sie sind mithin nur geeignet, leere Behälter herzustellen, die an einer anderen Stelle mit einem Getränkeinhalt od. dgl. befüllt außerhalb der Rotations-Formmaschine auch mit einem entsprechenden Verschluß, beispielsweise Schraubverschluß, versehen werden.

Durch Patent Abstracts of Japan Bd. 0131, Nr. 22 (M-807),27. März 1989 (1989-03-27) -&; JP 63 297024 A (TOPPAN PRINTING CO LTD), 5.Dezember 1988 (1988-12-05), ist als nächstliegender, gattungsbildender Stand der Technik eine Herstellvorrichtung zum Durchführen eines Blasform-, Füll- und Schließverfahrens für Kunststoffbehälter bekannt mit mindestens einer ersten Art einer Formvorrichtung, in die mindestens ein Schlauch plastifizierten Kunststoffmaterials einbringbar ist, wobei die jeweilige Formvorrichtung der ersten Art um eine Achse schwenkbar zu einzelnen, räumlich voneinander getrennten Stationen bringbar ist und wobei zumindest eine Station dem Blasformen des Behälters dient und mindestens eine weitere Station dem Befüllen und Verschließen des derart blasgeformten Behälters. Bei der bekannten Lösung findet das Befüllen und Verschließen des blasgeformten Behälters in einer einzigen Station oder in zwei aufeinanderfolgenden Stationen statt, wobei mehrere solcher Stationen diametral einander gegenüberliegend zu der Schwenkachse der Herstellvorrichtung angeordnet sind und Paare bilden mit jeweils mindestens einer vorangegangenen Station, die dem Blasformen und Befüllen des Behälters dient. Bei der bekannten Lösung wird die Formvorrichtung als Ganzes, also zusammen mit den formgebenden Teilen für die Behälterkopfgeometrie, zu den genannten einzelnen Stationen in horizontaler Richtung verschwenkt, was mit entsprechend großen Schwenk- und Drehmassen einhergeht, die für eine genaue Positionierung in der jeweiligen Station von der Antriebsseite her sicher beherrscht werden müssen. Die Ansteuerung der Formwerkzeuge für die jeweilige Formvorrichtung geschieht wiederum mittels hydraulischer Antriebe in Form von Arbeitszylindern.

Ausgehend von diesem Stand der Technik liegt der Erfindung die Aufgabe zugrunde, eine Herstellvorrichtung zum Durchführen eines Blasform-, Füll-und Schließverfahrens für Kunststoffbehälter zu schaffen, die es erlaubt, moderne Antriebskonzepte zum Einsatz zu bringen, beispielsweise in Form elektrischer oder pneumatischer Antriebe, deren Wartungsaufwand reduziert ist und die insbesondere große Ausstoßraten an dem zu produzierenden Gut, wie Kunststoffbehältern, ermöglicht. Eine dahingehende Aufgabe löst eine Herstellvorrichtung mit den Merkmalen des Patentanspruches 1 in seiner Gesamtheit.

Dadurch, dass gemäß dem kennzeichnenden Teil des Patentanspruches 1 neben der Formvorrichtung der ersten Art eine weitere der zweiten Art vorhanden ist, die dem sterilen Verschließen des jeweiligen Kunststoffbehälters an seiner offenen Hals- und Kopfseite dient, über die der jeweilige Behälter mit dem Fluid steril befüllbar ist, dass die Formvorrichtung der ersten Art unter die ortsfest angeordnete Antriebseinheit der Formvorrichtung der zweiten Art einschwenkbar ist, und dass die zuordenbaren Formwerkzeuge von erster und zweiter Formvorrichtung eine gemeinsame Längsachse ausbilden, wird auf diese Art und Weise die Formvorrichtung der ersten Art als Ganzes mit der Formvorrichtung der zweiten Art im Umfang der zuordenbaren Formwerkzeuge (Kopfbacken) schwenkend bewegt, was die Schwenk- und Drehmassen gering hält, so dass dergestalt nicht nur der Produktionsprozeß mit reduzierten Fliehkräften sicher durchgeführt werden kann, sondern auch die Antriebsleistung für die Schwenkbewegung der jeweiligen Formvorrichtung ist entsprechend reduziert, was sowohl die Herstellkosten als auch die Betriebskosten mit der Herstellvorrichtung senkt. Mit der Realisierung der einzelnen Herstell- und Bearbeitungsstatiorien lassen sich auch moderne Antriebskonzepte realisieren und die einzelnen Formvorrichtungen lassen sich mittels elektrischer Schrittantriebe ansteuern, so dass dergestalt Verschmutzungen durch ein Hydraulikmedium od. dgl. mit Sicherheit vermieden sind.

Die jeweilige Förmvorrichtung der ersten Art ist um eine Achse schwenkbar zu einzelnen, räumlich voneinander getrennten Stationen bewegbar, wobei zumindest eine Station dem Blasformen des Behälters dient und eine weitere Station dem Befüllen und Verschließen des derart blasgeformten Behälters dient, so dass es möglich ist, zumindest zeitgleich einen Schlauch aus plastifiziertem Kunststoffmaterial zum Herstellen des Kunststoffbehälters blaszuformen und einen entsprechend bereits derart hergestellten Behälter in der anderen Station mit dem Medium, insbesondere in Form eines Fluids, zu befüllen und zu verschließen. Bei der dahingehenden Anordnung lassen sich die Ausstoßraten im wesentlichen verdoppeln. Da die einzelnen Herstellschritte auf verschiedene Stationen verteilt sind, ist darüber hinaus die Bearbeitungssicherheit und Bearbeitungsgenauigkeit gegenüber den bekannten Ein-Station-Herstellverfahren verbessert, bei denen alle Herstellschritte in zeitlicher Abfolge an einem Ort (Station) vorgenommen werden und nicht gleichzeitig wie bei der erfindungsgemäßen Vorrichtung.

Bei einer bevorzugten Ausführungsform der erfindungsgemäßen Herstellvorrichtung ist in einer ersten Station der jeweilige Schlauch aus plastifiziertem Kunststoffmaterial in die Formvorrichtung der ersten Art einbringbar, wobei in einer in Schwerikrichtung nachfolgenden zweiten Station dieser aus plastifiziertem Kunststoffmaterial bestehende Extrusionsschlauch zum Erstellen des. Behälters b!asformbar ist, wobei in einer in Schwenkrichtung nachfolgenden dritten Station der blasgeformte Behälter steril befüllt und verschließbar ist, und wobei in einer in Schwenkrichtung nachfolgenden vierten Station der Entformvorgang des jeweils blasgeformten, befüllten und steril verschlossenen Behälters stattfindet. Auf diese Art und Weise ist der gesamte Herstellvorgang für die Kunststoffbehälter auf vier verschiedene Stationen verteilt, wobei diese zeitgleich den jeweils ihnen zugewiesenen Herstellschritt ausführen, was zu sehr hohen Takt- und Ausstoßraten an befüllten und steril verschlossenen Kunststofferzeugnissen führt - auch in Ampullenform -.

Bei einer weiteren bevorzugten Ausführungsform der erfindungsgemäßen Herstellvorrichtung weisen in Schwenkrichtung der Formvorrichtung der ersten Art die vier Stationen einen radialen Abstand von jeweils 90° auf, wobei vier Formvorrichtungen der ersten Art in Hintereinanderabfolge in die jeweilige Stationen einschwenkbar sind. Dergestalt sind auf einem Kreisumfang der Herstellvorrichtung in gleichmäßigen radialen Abständen voneinander die Herstellstationen verteilt, so dass nur ausgesprochen kurze Herstellpausen entstehen, wenn die Formvorrichtung der ersten Art jeweils in die nachfolgende Herstellstation eingeschwenkt wird. Vorzugsweise ist dabei vorgesehen; dass die jeweilige Formvorrichtung der ersten Art um eine Vertikale schwenkbar ist und dass die jeweilige Station ortsfest angeordnet ist.

Bei einer weiteren bevorzugten Ausführungsform der erfindungsgemäßen Herstellvorrichtung ist die jeweilige Formvorrichtung zum Bewegen mindestens eines Formwerkzeuges mittels einer Kulissensteuerung, die das jeweilige Formwerkzeug zumindest für das Schließen der Form in eine Schließstellung bringt, ansteuerbar, wobei die Kulissensteuerung von einem Antrieb, vorzugsweise in Form des elektrischen Schrittmotors, betätigbar ist. Dies erlaubt einen gleichförmigen sicheren und positionsgenauen Antrieb des jeweiligen Formwerkzeuges und benötigt nur einen geringen Wartungsaufwand. Des weiteren kann durch die Kulissensteuerung in zeitlich dichter Abfolge eine Vielzahl von Öffnungs- und Schließvorgängen vorgenommen werden, was weiter den hohen Ausstoß an zu produzierendem Gut begünstigt.

Als besonders vorteilhaft hat es sich für die Herstellvorrichtung erwiesen, den jeweiligen Antrieb für die jeweilige Formvorrichtung der ersten Art ortsfest an mindestens einem Teil der Stationen vorzusehen, wobei über eine Kupplungsstelle diese Formvorrichtung an die Antriebswelle des Antriebes ankoppelbar ist. Bei der dahingehenden Lösung wird der Antrieb an die genannte Formvorrichtung nur dann angekuppelt, sofern dies für einen Öffnungs- oder Schließvorgang mit den Formwerkzeugen notwendig ist und insbesondere beim Ein- und Ausschwenken der Formvorrichtung aus einer Station ist der zugeordnete Antrieb nicht mit der Formvorrichtung mitzuführen, was die Massenkräfte reduziert und mithin die Fliehkräfte, was zu den bereits genannten Vorteilen führt. Vorzugsweise ist dabei vorgesehen, dass die Antriebswelle für die erste Formvorrichtung senkrecht zu ihrer Schwenkachse verläuft, wobei die weitere Antriebswelle des weiteren Antriebes für die Formvorrichtung der zweiten Art parallel zu dieser Schwenkachse verläuft, und wobei dieser weitere Antrieb ortsfest an der dritten Herstellstation angeordnet ist, die für das Befüllen sowie das sterile Verschließen des Behälters zuständig ist. Auf diese Art und Weise läßt sich behinderungsfrei die Formvorrichtung der zweiten Art für einen Öffnungs-und Schließvorgang mit ihren Formwerkzeugen ansteuern, da aufgrund der unterschiedlichen Antriebswellen die zugehörigen Antriebssysteme mit ihren Antrieben auf verschiedenen Ebenen innerhalb der Herstellvorrichtung liegen. In der dritten Herstellstation werden dann gemeinsam mit der Formvorrichtung der ersten Art die Formwerkzeuge der Formvorrichtung der zweiten Art mit eingeschwenkt und durch Ansteuern des weiteren Antriebes lassen sich dann die Formwerkzeuge der Formvorrichtung der zweiten Art nach Befüllen des Behälters in die Schließstellung bringen, bei der unter Formgebung des Kopfteils des Behälters das sterile Verschließen des Behälterinhalts erfolgt.

Bei einer weiteren bevorzugten Ausführungsform der erfindungsgemäßen Herstellvorrichtung ist zwischen den einzelnen Stationen eine Laminar Flow Einheit oder eine sterile Barriere vorhanden, die die freien Öffnungen der Formvorrichtung der ersten Art und mithin die jeweilige Behälteröffnung vor ihrem sterilen Verschließen abdeckt. Hierdurch ist sichergestellt, dass nicht ungewollt Verschmutzungspartikel in die Behälteröffnung mit dem Fluid während des Herstellprozesses eintreten können.

Im folgenden wird die erfindungsgemäße Herstellvorrichtung anhand eines Ausführungsbeispiels nach der Zeichnung näher erläutert.
Dabei zeigen in prinzipieller und nicht maßstäblicher Darstellung die
- Fig.1: eine Draufsicht auf die Herstellvorrichtung als Ganzes;
- Fig.2: eine Seitenansicht auf die Herstellvorrichtung in Richtung des Pfeiles X in Fig.1 gesehen ohne Abgabestation;
- Fig.3: eine Draufsicht auf die Formvorrichtung der ersten Art (detailliert beschrieben in der DE-A-103 17 711.6);
- Fig.4: eine Draufsicht auf einen Teil der Formvorrichtung der zweiten Art (detailliert beschrieben in der DE-A-103 17 712.4).

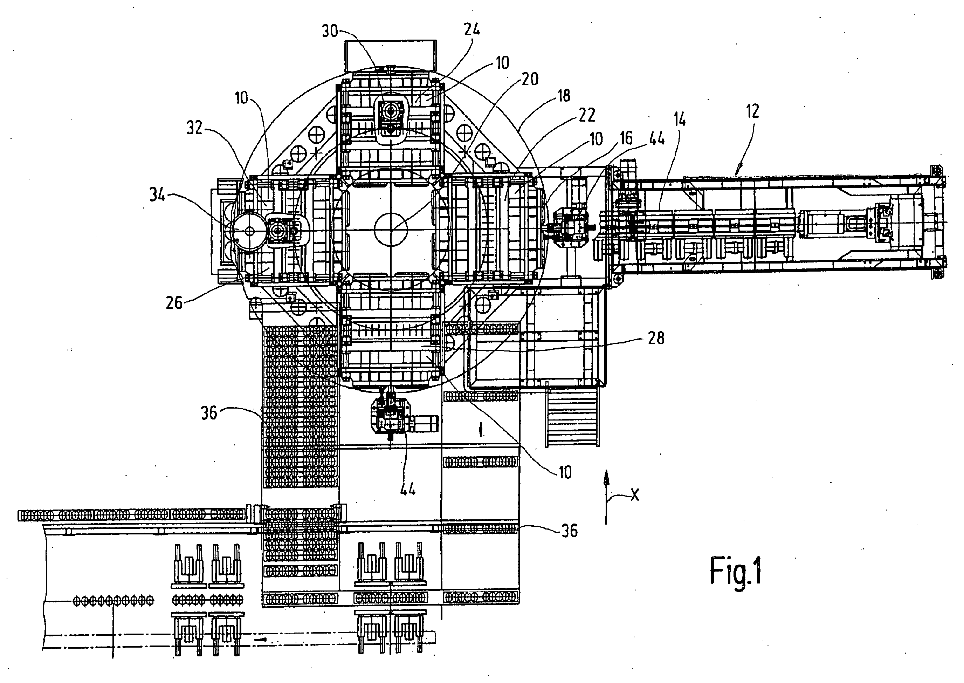

Die Fig.1 zeigt in Draufsicht die Herstellvorrichtung zum Durchführen eines Blasform-, Füll- und Schließverfahrens für Kunststoffbehälter einschließlich Ampullen mit einer ersten Art an Formvorrichtungen 10. In die jeweilige Formvorrichtung 10 sind Schläuche eines plastifizierten Kunststoffmaterials einbringbar, die von einer als Ganzes mit 12 bezeichneten Extrudereinrichtung erzeugt werden. Hierfür wird Kunststoffgranulat entlang einer beheizten Extruderstrecke 14 aufgeschmolzen und über eine Abgabeeinrichtung 16 in die jeweiligen Formwerkzeuge der Formvorrichtung 10 der ersten Art eingebracht, sofern sich diese in ihrer geöffneten, den jeweiligen Extrusionsschlauch aufnehmenden, geöffneten Stellung befinden. Dergestalt lassen sich beispielsweise in einer Reihe zehn Extrusionsschläuche von einer Formvorrichtung 10 der ersten Art aufnehmen. Die jeweilige Formvorrichtung 10 ist in einer horizontalen Ebene 18 um eine vertikal verlaufende Schwenkachse 20 der Herstellvorrichtung um diese schwenkbar. Des weiteren weist die Herstellvorrichtung vier räumlich voneinander getrennte Stationen 22,24,26 und 28 auf, wobei die erste Station 22 zur Aufnahme der Extrusionsschläuche bereits vorstehend erläutert wurde. Die weitere Station 24 dient dem Blasformen der in Reihe nebeneinander angeordneten Extrusionsschläuche mittels einer Blasformeinrichtung 30, die die einzelnen Kunststoffschläuche mittels Blasluft gegen die Formwandungen der Formwerkzeuge der Formvorrichtung 10 der ersten Art zur Behälterherstellung drückt. Der dahingehende Blasvorgang kann durch Vakuum, Stützluft od. dgl. in der Formvorrichtung der ersten Art unterstützt sein. Die in Schwenkrichtung nachfolgende weitere Station 26 dient dem sterilen Befüllen der in der Station 24 hergestellten Kunststoffbehälter, wobei nach dem Befüllen die Behälterenden steril in der Station 26 verschlossen werden. Hierfür dient in der Station 26 die Antriebseinheit einer Formvorrichtung 32 der zweiten Art und die Befülleinrichtung 34 ist oberhalb der Formvorrichtung 32 und dem Betrachter der Fig.1 zugewandt angeordnet. Die weitere in Schwenkrichtung nachfolgende Station 28 dient dem Entformen der blasgeformten, befüllten und verschlossenen Kunststoffbehälter, wobei die derart aus der Formvorrichtung 10 entformten Behälter auf Palettenbahnen 36 für deren Weitertransport, insbesondere in eine Verpackung (nicht dargestellt), ausgeschoben werden.

Wie des weiteren die Fig.1 zeigt, sind in Schwenkrichtung der Formvorrichtung 10 der ersten Art die vier Stationen 22,24,26 und 28 mit einem radialen Abstand von jeweils 90° aufeinanderfolgend innerhalb der Herstellvorrichtung angeordnet, wobei vier Formvorrichtungen 10 der ersten Art gemeinsam mit den Formwerkzeugen der Formvorrichtung der zweiten Art in Hintereinanderabfolge in die jeweilige Stationen 22,24,26 und 28 einschwenkbar sind. Mit der in Fig.1 gezeigten Herstellvorrichtung ist es also möglich, zeitgleich alle vier verschiedenen Herstelloperationen, wie Aufnehmen von Extrusionsschläuchen, Blasformen, Füllen und Verschließen sowie Entformen vorzunehmen, was die Takt- und Ausstoßrate an zu erstellenden Kunststofferzeugnissen deutlich erhöht gegenüber den bisher bekannten vergleichbaren Herstellvorrichtungen, die in zeitlicher Hintereinanderabfolge an einer Station die genannten Bearbeitungsvorgänge vornehmen.

Die jeweilige Formvorrichtung 10 der ersten Art ist entgegen dem Uhrzeigersinn um die vertikale Achse 20 schwenkbar angeordnet und die jeweiligen Stationen 22,24,26und 28 sind ortsfest innerhalb der Herstellvorrichtung plaziert.

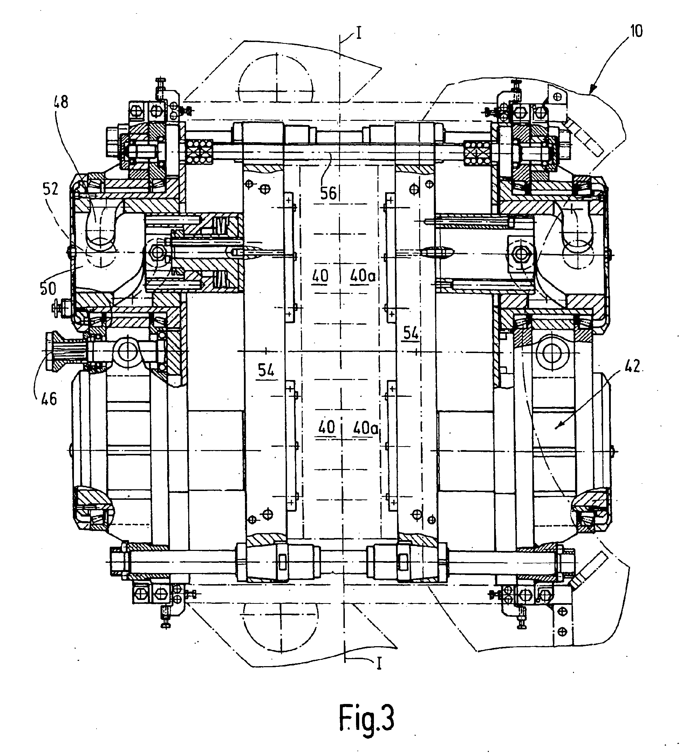

Der Aufbau der Formvorrichtung 10 der ersten Art ergibt sich aus der Draufsicht nach der Fig.3. Im übrigen ist die dahingehende Formvorrichtung eingehend in der DE-A-103 17 711.6 der Anmelderin beschrieben, so dass an dieser Stelle nur noch auf den grundsätzlichen Aufbau der Formvorrichtung eingegangen wird. Die Gesamt-Formvorrichtung 10 dient dem Bewegen von Formwerkzeugen 40,40a und an seiner freien Stirnseite weist das jeweilige Formwerkzeug 40,40a muldenförmige Ausnehmungen (nicht dargestellt) auf, die dergestalt Formhälften ausbilden zum Erzeugen von Behältergeometrien bei nicht näher dargestellten Kunststoffbehältern - auch in Ampullenform -. Zum Erzeugen der dahingehenden Behältergeometrien arbeiten die beiden Formwerkzeuge 40,40a zusammen, wobei gemäß der Darstellung nach der Fig.3 sich die beiden Formwerkzeuge 40,40a in der geschlossenen formgebenden Stellung befinden, bei der die freien Stirnseiten der Formwerkzeuge längs einer Schließtrennlinie I - I aneinandersto-ßen.

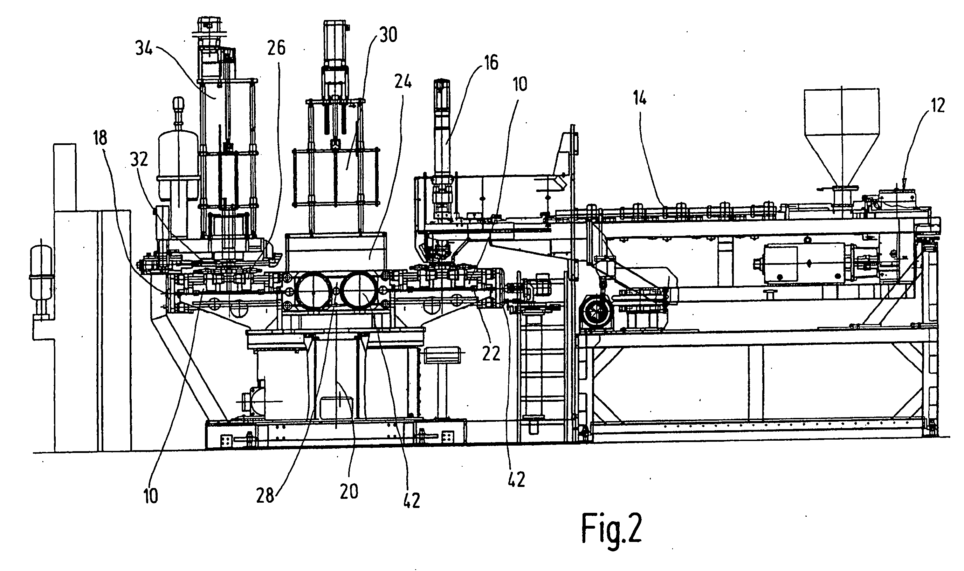

Zum Bewegen des jeweiligen Formwerkzeuges 40,40a dient eine als Ganzes mit 42 bezeichnete Kulissensteuerung, die mittels eines zentral angeordneten Antriebes 44 antreibbar ist, wobei in der Fig.3 von dem Antrieb 44 der Einfachheit halber nur die Keilwelle 46 dargestellt ist. Die dahingehende Keilwelle 46 ist über ein Kuppelstück (nicht dargestellt) in der Art einer Klauenkupplung mit der Abtriebswelle eines Elektromotors kuppelbar, beispielsweise in Form eines elektrischen Schrittmotors, der dergestalt den Antrieb für die Kulissensteuerung 42 erlaubt, in dem die Antriebswelle der Formvorrichtung 10 in eine gemeinsame Achse mit der Abtriebswelle des Antriebes 44 geschwenkt wird und über die Kupplung erfolgt dann die Übertragung des Antriebsdrehmomentes für die Formwerkzeuge 40,40a. Wie die Darstellung nach der Fig.2 zeigt, ist ein dahingehender Antrieb 44 zentral zumindest in der Station 28 sowie an der Station 22 vorhanden, um dergestalt die Formvorrichtung zu öffnen, um den Entformvorgang sicherzustellen und die Form nachfolgend zu schließen, um den jeweiligen Extrusionsschlauch, gebildet durch die Extrudereinrichtung 12 mit ihrer Abgabeeinrichtung 16, aufnehmen zu können.

Die genannte Kulissensteuerung 42 weist eine Schlitzführung 48 auf, die sich außenumfangsseitig an einem mit der Keilwelle 46 antreibbaren Rotationskörper 50 befindet. In die Schlitzführung 48 greift ein Betätigungsteil 52 ein, das mit einem Schlittenteil 54 zusammenwirkt, wobei bei Rotation der Schlitzführung 48 von ihrem einen Endbereich zu ihrem anderen Endbereich und umgekehrt das zuordenbare Schlittenteil 54 mit dem Formwerkzeug 40,40a über das derart längsverfahrbare Betätigungsglied 52 von einer Schließstellung längs der Schließlinie I - I in eine Öffnungsstellung (nicht dargestellt) der aus dem jeweiligen Formwerkzeug 40,40a gebildeten Form und umgekehrt verfahrbar ist. Dergestalt lassen sich paarweise die Formwerkzeuge 40,40a gegenüberliegend von jeweils einer Kulissensteuerung 42 synchron über das gemeinsame Antriebsteil mit Antrieb 44 in der jeweils hierfür vorgesehenen Station bewegen, so dass vier Kulissensteuerungen paarweise einander gegenüberliegend von einer gemeinsamen Betätigungswelle 56 angesteuert sind.

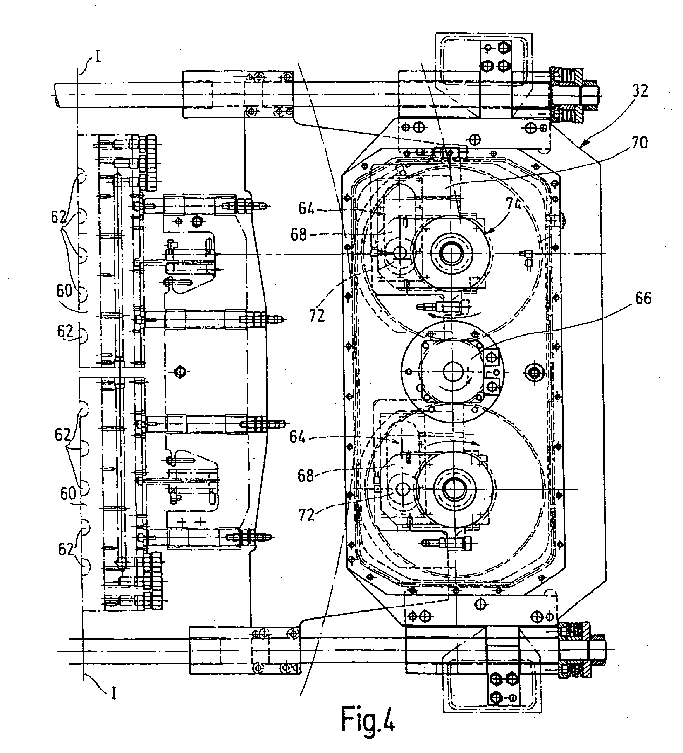

Für die jeweils einzuschwenkende, von der Station 24 kommende Formvorrichtung 10 der ersten Art ist in der Station 26 die Antriebseinheit der Formvorrichtung 32 der zweiten Art angeordnet, wobei in Blickrichtung auf die Fig.2 gesehen die Antriebseinheit der Formvorrichtung 32 stationär angeordnet ist und die jeweilige Formvorrichtung 10 der ersten Art läßt sich unterhalb der Antriebseinheit der Formvorrichtung 32 der zweiten Art in die Station 26 mittels eines zentralen Drehantriebes (nicht dargestellt) entlang der Schwenkachse 20 radial in einer gemeinsamen horizontalen Ebene 18 einschwenken. Bei der dahingehenden Einschwenkbewegung werden auch die Formwerkzeuge 60 der Formvorrichtung 32 der zweiten Art von der Formvorrichtung 10 der ersten Art mitgenommen. Die dahingehende Formvorrichtung 32 der zweiten Art ist zumindest teilweise in der Fig.4 näher dargestellt und im übrigen in der DE-A-103 17 712.4 vollumfänglich beschrieben, so dass an dieser Stelle nur noch auf die Grundzüge dieser Formvorrichtung eingegangen wird.

Die in Fig.4 gezeigte Gesamt-Formvorrichtung 32 der zweiten Art dient dem Bewegen von Formwerkzeugen 60, die stirnseitig muldenförmige Ausnehmungen 62 aufweisen, die dergestalt Formhälften ausbilden zum Erzeugen von Kopfgeometrien bei nicht näher dargestellten Kunststoffbehältern. Zum Erzeugen der dahingehenden Kopfgeometrien arbeitet das jeweilige Formwerkzeug 60 mit einem korrespondierenden Formwerkzeug mit entsprechend ausgebildeten Ausnehmungen (nicht dargestellt) zusammen, wobei sich die Anordnung nach der Fig.4 entsprechend auf der anderen Seite der Schließtrennlinie I - I wiederfindet (nicht dargestellt). Die Formvorrichtung 32 zum Bewegen des Formwerkzeuges 60 weist eine als Ganzes mit 64 bezeichnete zweite Kulissensteuerung als Antriebseinheit auf, über die das jeweilige Formwerkzeug 60 für das Schließen der Form längs der Schließtrennlinie I - I ansteuerbar ist, wobei die weitere Kulissensteuerung 64 wiederum von einem weiteren Antrieb 66, vorzugsweise in Form eines Elektromotors, beispielsweise in Form eines elektrischen Schrittmotors, betätigbar ist. Hierfür weist die weitere Kulissensteuerung 64 eine Schlitzführung 68 in einem Zustellteil 70 auf, in die ein Betätigungsglied 72 eingreift, das von einem mittels des weiteren Antriebes 66 antreibbaren Rotationsteil 74 ansteuerbar in eine der Öffnungs- und Schließstellung I - 1 des Formwerkzeuges 60 entsprechende Position verfahrbar ist. Auch hier sind wiederum paarweise die Formwerkzeuge 60 gegenüberliegend von jeweils einer Kulissensteuerung 64 synchron in ihre Schließstellung bringbar, wobei zwei zu der Schließtrennlinie I - I gegenüberliegende elektrische Antriebe 66 jeweils zwei paarweise einander gegenüberliegende zweite Kulissensteuerungen 64 zum Bewegen der Formwerkzeuge 60 ansteuern.

Aufgrund der Übereinanderanordnung der beiden Formvorrichtungen 10 und 32 in der Station 26 bilden diese mit ihren Formwerkzeugen 10; 60 eine gemeinsame Längsachse aus, die der Behälterlängsachse entspricht, wobei die Antriebseinheit 64,66 der Formvorrichtung 32 in der Station 26 verbleibt und die Formwerkzeuge 60 der Vorrichtung 32 werden gemeinsam mit der jeweiligen Formvorrichtung 10 in die Station 26 gebracht, in der die Antriebseinheit 64,66 die Formwerkzeuge 60 in die Schließstellung bringt, und wobei die Formvorrichtung 10 in der Station 26 in Blickrichtung auf die Fig.2 gesehen unterhalb der Formvorrichtung 32 verbleibt.

Mit der genannten Anordnung ist also die Antriebswelle für die erste Formvorrichtung 10 senkrecht zu ihrer Schwenkachse 20 verlaufend angeordnet und die weitere Antriebswelle des weiteren Antriebes 66 für die Formvorrichtung 32 der zweiten Art verläuft parallel zu dieser Schwenkachse 20. Ferner ist der weitere Antrieb 66 ortsfest an der zweiten Formvorrichtung 32 angeordnet. Ferner befindet sich zwischen den einzelnen Stationen 22,24,26 und 28 eine Laminar Flow Einheit oder sterile Barriere (nicht dargestellt), die die freien Öffnungen der Formvorrichtung 10 der ersten Art und mithin die jeweilige Behälteröffnung vor ihrem sterilen Verschließen sicher abdeckt.

Mit der erfindungsgemäßen Herstellvorrichtung und dem Aufteilen verschiedener Formgebungsschritte an verschiedenen Stationen ist eine Art Karussell-Anordnung geschaffen, die sehr hohe Taktfrequenzen für das auszustoßende Kunststoffgut in Form der Behälter ermöglicht. Durch die Verwendung von elektrischen Antrieben ist in hohem Maße den Hygieneanforderungen Genüge getan und insbesondere läßt sich die eigentliche Herstellvorrichtung mit ihren Stationen von der Extrudereinrichtung, die das plastifizierte Kunststoffmaterial trennt, hermetisch abschließen, so dass sich für das eigentliche Blasformen, Befüllen und sterile Verschließen Reinraumbedingungen erreichen lassen, sofern dies anwenderseitig gewünscht ist.

## Patentansprüche

1. Herstellvorrichtung zum Durchführen eines Blasform-, Füll- und Schließverfahrens für Kunststoffbehälter mit mindestens einer ersten Art einer Formvorrichtung (10), in die mindestens ein Schlauch plastifizierten Kunststoffmaterials einbringbar ist, wobei die jeweilige Formvorrichtung (10) der ersten Art um eine Achse (20) schwenkbar zu einzelnen, räumlich voneinander getrennten Stationen (22,24,26,28) bringbar ist und wobei zumindest eine Station (24) dem Blasformen des Behälters dient und mindestens eine weitere Station (26) dem Befüllen und Verschließen des derart blasgeformten Behälters, **dadurch gekennzeichnet, dass** neben der Formvorrichtung (10) der ersten Art eine weitere (32) der zweiten Art vorhanden ist, die dem sterilen Verschließen des jeweiligen Kunststoffbehälters an seiner offenen Hals- und Kopfseite dient, über die der jeweilige Behälter mit dem Fluid steril befüllbar ist, dass die Formvorrichtung (10) der ersten Art unter die ortsfest angeordnete Antriebseinheit (64,66) der Formvorrichtung (32) der zweiten Art einschwenkbar ist, und dass die zuordenbaren Formwerkzeuge (10;60) von erster und zweiter Formvorrichtung (10;32) eine gemeinsame Längsachse ausbilden.

2. Herstellvorrichtung nach Anspruch 1, **dadurch gekennzeichnet, dass** in einer ersten Station (22) der jeweilige Schlauch aus plastifiziertem Kunststoffmaterial in die Formvorrichtung (10) der ersten Art einbringbar ist, dass in einer in Schwenkrichtung nachfolgenden zweiten Station (24) dieser Schlauch zum Erstellen des Behälters blasformbar ist, dass in einer in Schwenkrichtung nachfolgenden dritten Station (26) der blasgeformte Behälter steril befüllt und verschließbar ist, und dass in einer in Schwenkrichtung nachfolgenden vierten Station (28) der Entformvorgang des jeweils blasgeformten, befüllten und steril verschlossenen Behälters stattfindet.

3. Herstellvorrichtung nach Anspruch 2, **dadurch gekennzeichnet, dass** in Schwenkrichtung der Formvorrichtung (10) der ersten Art die vier Stationen (22,24,26,28) einen radialen Abstand von jeweils 90° aufweisen und dass vier Formvorrichtungen (10) der ersten Art in Hintereinanderabfolge in die jeweiligen Stationen (22,24,26,28) einschwenkbar sind.

4. Herstellvorrichtung nach einem der Ansprüche 1 bis 3, **dadurch gekennzeichnet, dass** die jeweilige Formvorrichtung (10) der ersten Art um eine vertikale Achse (20) schwenkbar ist und dass die jeweiligen Stationen (22,24,26,28) ortsfest angeordnet sind.

5. Herstellvorrichtung nach einem der Ansprüche 1 bis 4, **dadurch gekennzeichnet, dass** die jeweilige Formvorrichtung (10;32) zum Bewegen mindestens eines Formwerkzeuges (40,40a;60) mittels einer Kulissensteuerung (42;64), die das jeweilige Formwerkzeug (40,40a;60) zumindest für das Schließen der Form in eine Schließstellung (I - I) bringt, ansteuerbar ist und dass die Kulissensteuerung (42;60) von einem Antrieb (44;66), vorzugsweise in Form eines elektrischen Schrittmotors, betätigbar ist.

6. Herstellvorrichtung nach Anspruch 5, **dadurch gekennzeichnet, dass** der jeweilige Antrieb (44) für die jeweilige Formvorrichtung (10) der ersten Art ortsfest an mindestens einem Teil der Stationen (22,28) vorhanden ist und dass über eine Kupplungsstelle diese Formvorrichtung (10) an die Abtriebswelle des Antriebes (44) ankuppelbar ist.

7. Herstellvorrichtung nach Anspruch 6, **dadurch gekennzeichnet, dass** die Antriebswelle (46) für die erste Formvorrichtung (10) senkrecht zu ihrer Schwenkachse (20) verläuft, dass die weitere Antriebswelle des weiteren Antriebes (66) für die Formvorrichtung (32) der zweiten Art parallel zu dieser Schwenkachse (20) verläuft, und dass der weitere Antrieb (66) ortsfest an der zweiten Formvorrichtung (32) angeordnet ist.

8. Herstellvorrichtung nach einem der Ansprüche 1 bis 7, **dadurch gekennzeichnet, dass** zwischen den einzelnen Stationen (22,24,26) eine Laminar Flow Einheit oder eine sterile Barriere vorhanden ist, die die freien Öffnungen der Formvorrichtung (10) der ersten Art und mithin die jeweilige Behälteröffnung vor ihrem sterilen Verschließen abdeckt.

## Claims

1. Production device for carrying out a blow moulding, filling, and closing process for plastic containers with at least one first type of moulding means (10), into which at least one hose of a plastified plastic material can be inserted, whereby the relevant moulding means (10) of the first type can be tilted around an axis (20) into individual, spatially separated stations (22, 24, 26, 28), and whereby at least one station (24) serves for blow moulding the container, and at least one further station (26) for filling and closing the container blow moulded in this way, **characterised in that** a further (32) means of the second type is provided in addition to the moulding means (10) of the first type, serving for the sterile closing of the relevant plastic container at its open throat and head side via which the relevant container can be filled with a fluid in a sterile way, and **in that** the moulding means (10) of the first type can be tilted under the locationally fixed drive unit (64, 66) of the moulding means (32) of the second type, and **in that** the associated moulding tools (10; 60) of the first and second moulding means (10; 32) form a common longitudinal axis.

2. Production device according to Claim 1, **characterised in that** the relevant hose of a plastified plastic material can be inserted into the moulding means (10) of the first type in a first station (22), **in that** this hose can be blow moulded for creating the container within a second station (24) following downstream in tilting direction, **in that** the blow moulded container can be filled and closed in a sterile way in a third station (26) following downstream in tilting direction, and **in that** the removal of the relevant blow moulded, filled, and sterile closed container takes place in a fourth station (28) following downstream in tilting direction.

3. Production device according to Claim 2, **characterised in that** the four stations (22, 24, 26, 28) are arranged at a radial distance of 90° each in tilting direction of the moulding means (10) of the first type, and **in that** four moulding means (10) of the first type can be tilted into the relevant stations (22, 24, 26, 28) in sequential order.

4. Production device according to one of the Claims 1 to 3, **characterised in that** the relevant moulding means (10) of the first type can be tilted around a vertical axis (20), and **in that** the relevant stations (22, 24, 26, 28) are locationally fixed.

5. Production means according to one of the Claims 1 to 4, **characterised in that** the relevant moulding means (10; 32) can be controlled by means of a background controller (42; 64) which moves the relevant moulding tool (40, 40a; 60) into a closed position (I - I) at least for closing the mould for moving at least one moulding tool (40, 40a; 60), and **in that** the background controller (42; 60) can be activated by a drive (44; 66), preferably in the form of an electric stepper.

6. Production device according to Claim 5, **characterised in that** the relevant drive (44) for the relevant moulding device (10) of the first type is positioned in a locationally fixed way on at least one part of the stations (22, 28), and **in that** this moulding means (10) can be coupled to the drive shaft of the drive (44) via a coupling point.

7. Production device according to Claim 6, **characterised in that** the drive shaft (46) for the first moulding means (10) extends vertical in relation to its tilt axis (20), **in that** the further drive shaft of the further drive (66) for the moulding means (32) of the second type extends parallel to this tilt axis (20), and **in that** the further drive (66) is positioned in a locationally fixed way on the second moulding means (32).

8. Production device according to one of the Claims 1 to 7, **characterised in that** a laminar flow unit or a sterile barrier is provided between the individual stations (22, 24, 26), the same covering the free openings of the moulding means (10) of the first type, and therefore the relevant container opening prior to the sterile closing of the same.

## Revendications

1. Dispositif de fabrication pour la réalisation d'un procédé de moulage par soufflage, de remplissage et de fermeture de contenants en plastique, ayant au moins un premier type de dispositif de formage (10) dans lequel au moins un tube souple en matière plastique plastifiée peut être mis en place, le dispositif de formage (10) respectif du premier type pouvant être mis en place en pivotement autour d'un axe (20) par rapport à des postes (22, 24, 26, 28) individuels séparés les uns des autres dans l'espace, et au moins un poste ((24) servant au moulage par soufflage du contenant, et au moins un autre poste (26) servant au remplissage et à la fermeture du contenant ainsi soufflé, **caractérisé en que**, à côté du dispositif de formage (10) du premier type, il en existe un autre (32) du deuxième type, qui sert à la fermeture stérile du contenant en plastique respectif sur son côté de goulot et de tête ouvert, par le biais duquel le contenant respectif peut être rempli de façon stérile avec le fluide, en ce que le dispositif de formage (10) du premier type peut être amené à pivoter sous l'unité d'entraînement (64, 66), disposée de façon fixe, du dispositif de formage (32) du deuxième type, et en ce que les outils de formage (10 ; 60), pouvant être associés, du premier et du deuxième dispositif de formage (10 ; 32) forment un axe longitudinal commun.

2. Dispositif de fabrication selon la revendication 1, **caractérisé en ce que**, dans un premier poste (22), le tube souple respectif en matière plastique plastifiée peut être mis en place dans le dispositif de formage (10) du premier type, **en ce que**, dans un deuxième poste (24) qui suit dans le sens de pivotement, ce tube souple peut être moulé par soufflage pour réaliser le contenant, **en ce que**, dans un troisième poste (26) qui suit dans le sens de pivotement, le contenant soufflé est rempli de façon stérile et peut être fermé, et **en ce que**, dans un quatrième poste (28) qui suit dans le sens de pivotement, le processus de démoulage du contenant respectivement soufflé, rempli et fermé est effectué.

3. Dispositif de fabrication selon la revendication 2, **caractérisé en ce que**, dans le sens de pivotement du dispositif de formage (10) du premier type, les quatre postes (22, 24, 26, 28) présentent un intervalle radial de 90° chacun, et **en ce que** quatre dispositifs de formage (10) du premier type peuvent être conduits à pivoter les uns après les autres dans les postes (22, 24, 26, 28) respectifs.

4. Dispositif de fabrication selon une des revendications 1 à 3, **caractérisé en ce que** le dispositif de formage (10) respectif du premier type peut pivoter autour d'un axe vertical (20), et **en ce que** les postes (22, 24, 26, 28) respectifs sont disposés de façon fixe.

5. Dispositif de fabrication selon une des revendications 1 à 4, **caractérisé en ce que** le dispositif de formage (10 ; 32) respectif peut être piloté pour le déplacement d'au moins un outil de formage (40, 40a ; 60) au moyen d'une commande à coulisse (42 ; 64) qui amène l'outil de formage (40, 40a ; 60) respectif, au moins pour la fermeture du moule, dans une position de fermeture (I - I), et **en ce que** la commande à coulisse (42 ; 60) peut être actionnée par un entraînement (44 ; 66), de préférence sous forme de moteur pas à pas électrique.

6. Dispositif de fabrication selon la revendication 5, **caractérisé en ce que** l'entraînement (44) respectif du dispositif de formage (10) respectif du premier type est présent de façon fixe sur au moins une partie des postes (22, 28), et **en ce que**, par le biais d'un emplacement d'accouplement, ce dispositif de formage (10) peut être couplé à l'arbre de sortie de l'entraînement (44).

7. Dispositif de fabrication selon la revendication 6, **caractérisé en ce que** l'arbre d'entraînement (46) du premier dispositif de formage (10) est orienté perpendiculairement à son axe de pivotement (20), **en ce que** l'autre arbre d'entraînement de l'autre entraînement (66) du dispositif de formage (32) du deuxième type est orienté parallèlement à cet axe de pivotement (20), et **en ce que** l'autre entraînement (66) est disposé de façon fixe sur le deuxième dispositif de formage (32).

8. Dispositif de fabrication selon une des revendications 1 à 7, **caractérisé en ce que**, entre les différents postes (22, 24, 26), il y a une unité Laminar Flow ou une barrière stérile qui recouvre les ouvertures libres du dispositif de formage (10) du premier type et donc l'ouverture de contenant respective avant sa fermeture stérile.
